# EUROPEAN PATENT SPECIFICATION

(11) **EP 0 729 712 B1**
(45) Date of publication and mention of the grant of the patent: **26.08.1998**
(21) Application number: 96301399.0
(22) Date of filing: 01.03.1996
(51) Int. Cl.: A23N 15/10

(54) **Machine for vining peas and the like**
Maschine zum Ernten von Erbsen und dergleichen
Machine pour la récolte de petits pois et analogues

(30) Priority: 03.03.1995 GB 9504281
(43) Date of publication of application: 04.09.1996
(73) Proprietor: PIXALL LIMITED PARTNERSHIP, Clear Lake, WI 54005-8400 (US)
(72) Inventor: Davenport, Graham, Grimsby DN32 9PY (GB)
(74) Representative: Loven, Keith James

(56) References cited:
- DE-A- 3 240 489
- DE-C- 887 284
- US-A- 2 325 509
- US-A- 2 504 193
- US-A- 2 587 289
- US-A- 3 769 988

## Description

### Field of the Invention

This invention relates to a machine for vining peas and other legumes, and to a pea harvester incorporating such a machine.

### Background to the Invention

The term vining describes the process which takes plant material harvested from the field and produces therefrom, as separate streams, peas (or other seeds) and waste plant material (pods, stems, leaves). The term "threshing" describes one step of the vining process, in which pods are opened to let the peas out.

Throughout the specification, the apparatuses may be referred to in terms of "peas", for example "pea threshing apparatus", "pea vining machine", "pea harvesting machine". One skilled in the art will recognise that the present invention is for use with any crop which may be threshed using an apparatus of the invention.

An existing type of pea harvesting machine is self-propelled and lifts the pea plants at the front end thereof, passing them into a large perforate rotating drum in which is mounted an axially extending rotor with beaters therearound, rotating at a higher speed than the drum. The pea plants are carried up by centrifugal force on the drum's inner surface to the top of the drum and then caused to drop on to the rotor, where the impact of the beaters causes the pods to split, releasing the peas to pass through the drum walls for collection below by conveyors. The waste plant material is then discharged.

In order to achieve a satisfactory degree of separation of the peas from the pods, it is necessary to make the drum large both in length and in diameter, and to ensure that it is kept as near as possible to the horizontal during operation, to ensure that the plants are dropped on to the rotor at the right point for impact to cause bursting of the pods. A typical machine of this type will therefore be very large and heavy, since a two-part chassis, with hydraulic levelling rams between the two parts, is needed. Not only is the machine very expensive to build and to operate, but the weight causes compaction of the ground, making future cultivation more difficult.

As the plant material spirals its way along the drum from the input end to the discharge end, the cycle of lifting, dropping and beating occurs several more times. The remaining pods and waste become more chopped and broken, rendering the material small enough to pass through the perforations (mesh) of the drum walls. Typically, 75% of the peas are discharged in the first half of the drum's length, while the remaining 25% come through in the second half. Since waste material is also increasingly discharged with the peas along the length of the drum, it has been found that, for every 1000kg of peas produced, 600kg of waste is also discharged with the desired crop, requiring further separation in subsequent processing.

A further problem with this type of machine is that the impact of the beaters on the rotor with the pods can cause damage to the peas, reducing the quality and therefore value of the crop.

It is therefore desirable to be able to increase the efficiency and quality of the separation process.

It has been found that, when the drum becomes loaded, the cycle of pod opening changes. Because of the mass of material in the drum, the percussive effect of the beaters on the pods is diminished, and instead the pod opening increasingly occurs as a result of compression of material between the rotor and the drum wall. This compression causes the air trapped inside the pods to explode the pods, opening them along the seams. It has been found that, under these conditions, a drastic reduction in the damage to the peas occurs, increasing again when the load on the drum reduces.

DE 3240489 describes a machine for vining peas and the like comprising two friction elements revolving at different peripheral speeds. The friction elements are pressed together by means of a spring, and any plant material therebetween is compressed. As the quantity of material between the two friction elements increases, so the tension in the spring increases, thereby increasing the force on the plant material.

US 2504193 describes a green pea harvester and separator comprising a pair of spaced apart rollers through which pods are passed. As the pods are passed through the rollers, so they are squeezed, thereby squeezing out the peas from the pods.

### Summary of the Invention

The invention provides a pea threshing apparatus comprising:
a first and second threshing member between which plant material comprising pods passes, said first and second threshing members arranged to exert a compressive force on the legume plant material passing therebetween sufficient to open the pods;
said first threshing member having a first end and a second end and mounted by a mounting arrangement which permits said first threshing member to move towards and away from said second threshing member in order to maintain a substantially constant compressive force on the plant material compressed between said threshing members, characterized by;
said mounting arrangement including at least one hydraulic cylinder and a pressure control system to maintain a substantially constant hydraulic pressure therein, such that said first threshing member automatically moves towards and away from said second threshing member according to the quantity of plant material therebetween.

Preferably the compressive force may be varied according to the harvesting conditions and crop variety. Preferably the operator of the threshing apparatus can govern the compressive force.

One or more of the threshing members may be driven, and is preferably driven to produce a surface speed in excess of the surface speed of a second threshing member.

The threshing members may be drums, preferably perforate drums, conveyor belts, rotors, or any combination thereof. More preferably, at least one of the threshing members is perforate. Advantageously, the second threshing member is a drum.

Advantageously, the mounting means permit each end of the said threshing member to move independently of the other. The mounting means of at least one end of the threshing member may include a roller running in or on a track. Alternatively, the mounting means of at least one end of the threshing member may include a pivotally mounted arm, on which the threshing member is mounted at a point spaced from the pivot point of the said arm. Preferably, at least one end of the threshing member is mounted by a means which permits pivoting, which may be a self-aligning bearing. Where the mounting means for at least one end of the threshing member includes a roller running in or on a track, the hydraulic ram, or other actuator may be mounted adjacent to the track and act on a mounting for the roller. Where the mounting means for at least one end of the threshing member includes a pivotally mounted arm the hydraulic ram, or other actuator is arranged to cause pivoting of the said arm.

At least one of the threshing members is preferably provided with protrusions, adapted to move the plant material through the threshing apparatus, and advantageously the or each threshing member in the form of a rotor is provided with protrusions. The said protrusions may be in the form of paddles.

In a preferred embodiment of the invention, at least one of the threshing members is driven at a surface speed 10 to 40 percent, more preferably 25 percent, faster than a second threshing member. Preferably at least one of the threshing members is in the form of a rotor. At least one of the threshing members may comprise a conveyor belt. Most preferably the threshing apparatus comprises a conveyor belt, which may be drivable, above which is mounted a rotor. Either or both the rotor or the conveyor belt may be provided with means to permit a compressive force to be exerted on plant material therebetween and that force may be a variable force. Such a variable force may be achieved by mounting one of the threshing members on hydraulic cylinders which are connectable to a hydraulic circuit, which may comprise a pump to provide oil pressure and a valve to enable the oil pressure in the hydraulic cylinders to be controlled.

According to another aspect of the invention there is provided a machine for vining peas and the like including at least one threshing apparatus according to the invention. The machine for vining peas may comprise a rotatable perforate drum and means for rotating the drum, means for introducing pea plants at one end thereof, a rotor mounted within the drum and extending over the length thereof, and means for rotating the rotor independently of the drum, wherein the rotor is carried by mounting means arranged to move the rotor essentially laterally in order to maintain a substantially constant force on plant material compressed between the rotor and the internal surface of the drum.

Preferably mounting means for the rotor are arranged to permit each end thereof to move independently of the other, whereby the force may be more evenly applied along the length thereof. The mounting means preferably comprise hydraulic rams with pressure control means to maintain a substantially constant hydraulic pressure therein, whereby the rotor automatically moves towards and away from the wall of the drum according to the quantity of material therebetween. Each end of the rotor is preferably carried by a roller running in or on a transverse track, the hydraulic ram being mounted adjacent to the track and acting, for example, on a mounting for the roller. The rotor may be provided with an hydraulic ram at only one end thereof, in which case the other end of the rotor may be pivotally mounted, preferably by a self-aligning bearing.

The mounting means for carrying the rotor may comprise spring means to bias the rotor towards the wall of the drum causing a substantially constant force to be maintained on the material therebetween. The or each mounting means may be adapted to provide a range of movement of the rotor of up to 100mm away from the drum wall. Preferably 70mm of movement is provided.

The rotor is preferably provided with a plurality of protrusions, which may be in the form of paddles adapted to move the plant material between the rotor and the perforate drum. Preferably such paddles run along the length of the rotor and are spaced at intervals around the circumference thereof.

On the inside of the rotating drum there is preferably provided a stripper means to strip away any crop retained within the perforations of the drum. A brush means adapted to push back into the drum any small particles trapped in the perforations may also be provided.

In an embodiment of the invention peas (or the like) and small plant waste material passing through the perforations in the perforate drum fall on to a separating device, preferably comprising a draper belt, for separating peas (or the like) from the small plant waste material, said draper belt comprising a belt, at least two rollers, at least one of which is driven and a means to agitate the belt. The means to agitate the belt may comprise at least one protrusion attached to the underside of the draper belt which may co-operate with at least one roller of suitable shape to provide agitation. A roller of suitable shape is preferably polygonal in section and more preferably substantially hexagonal. At least one so shaped roller may be provided. Preferably there is a series of protrusions on the underside of the belt which may be in the form of slats, most preferably wooden slats. The said slats co-operate with the suitably shaped roller(s) to provide agitation.

A first conveyor may be mounted below the draper belt and so arranged that the peas (or the like) which roll down the draper belt land on the first conveyor. The first conveyor preferably carries the peas (or the like) to a first cleaning device, which is, for example, a suction fan which sucks off leaf and waste material. The peas (or the like) may be transferred from the first conveyor via the first cleaning device to an elevator, which is preferably a bucket elevator. From the elevator means the peas (or the like) may be deposited on to a second conveyor which preferably transports the peas (or the like) via a second cleaning means, preferably in the form of a suction cleaning fan and/or a rotatable perforate drum, to a holding hopper. Preferably the holding hopper is capable of being unloaded whilst the vining machine is in operation.

According to another aspect of the invention there is provided a first stage pea threshing apparatus, known as a pre-threshing apparatus, comprising at least two threshing members between which plant material comprising pods passes, said threshing members being arranged to exert a compressive force on the material passing therebetween, sufficient to open the pods.

Preferably, one or more of the threshing members is driven at a surface speed 10 to 40 percent, more preferably 25 percent, faster than a second threshing member. Preferably at least one of the threshing members is in the form of a rotor drum. At least one of the threshing members may comprise a conveyor belt. Most preferably the pre-threshing means comprises a conveyor belt, which may be drivable, above which is mounted a rotor. Either or both the rotatable drum or the conveyor belt may be provided with means to permit a compressive force to be exerted on plant material passing therebetween and that force may be a variable force. Such a variable force may be achieved by mounting one of the threshing members on hydraulic cylinders which are connectable to a hydraulic circuit, which may comprise a pump to provide oil pressure and a valve to enable the oil pressure in the hydraulic cylinders to be controlled.

The first stage threshing apparatus preferably forms part of a machine for vining peas and the like. More preferably, the first stage threshing apparatus forms part of a machine for vining peas according to the invention.

The invention also provides a mobile harvesting machine comprising a vehicle mounting a vining machine according to the invention, which vining machine may include a first stage threshing apparatus according to the invention, and means for gathering vines and feeding the vines to the vining machine.

The invention also provides a mobile harvesting machine comprising a vehicle mounting a first stage threshing apparatus according to the invention, and means for gathering vines and feeding the vines to the said first stage threshing apparatus.

The invention also provides a mobile harvesting machine comprising a vehicle mounting a vining machine, which vining machine includes a first stage threshing apparatus according to the invention, and means for gathering vines and feeding the vines to the vining machine.

The mobile harvesting machines according to the invention may be self-propelled, or may be propelled by an auxiliary source.

A process for threshing peas comprising a step of exerting on a mass of plant material comprising pods a compressive force sufficient to open the pods, the compressive force being exerted on said plant material by passing said plant material through a threshing apparatus according to the invention. Preferably the compressive force is exerted on the said plant material by passing the said plant material through a first stage threshing apparatus according to the invention.

Preferably the invention provides a process for threshing peas comprising a first step of passing plant material comprising pods through a first stage threshing apparatus according to the invention, and a second step of passing the plant material resulting from the first step through a second threshing apparatus, which the second threshing apparatus may comprise a threshing apparatus according to the invention.

Advantageously, the invention provides a process for vining peas including the step of passing plant material comprising pods through a machine for vining peas according to the invention.

An advantage of the machine in accordance with the invention is that the separation of the peas from the pods occurs with much higher efficiency than with the conventional arrangement, substantially reducing the size of drum required. Where the machine is part of a mobile harvesting machine, the overall size and weight of the harvesting machine can be reduced, in turn reducing its capital and running costs, as well as reducing the compaction effects on the soil in which the peas are grown. Further, the requirement to maintain the drum substantially level during operation is removed, thus avoiding the need for a complex double chassis arrangement for the vehicle, giving further benefits in reduction of size, weight and complexity of the machine.

Another advantage of the machine is that less damage is caused to the peas due to threshing, when compared with devices of the prior art.

The advantage of the first stage threshing apparatus is that it can thresh over 50% of the pods before the plant material enters the threshing drum. In this way the threshing capacity of any threshing drum can be increased.

The ability to increase the threshing capacity of a threshing drum by providing a first stage threshing apparatus which can thresh a proportion of the pods before the plant material enters the threshing drum is advantageous in two respects:
1) Where a vining machine is designed to include a first stage threshing apparatus the threshing drum, and hence the whole machine, can be smaller than it would otherwise be; and
2) Where a first stage threshing apparatus is fitted, as a retro-fit, to a vining machine which was not designed to have such an apparatus, the threshing capacity of threshing drum of the machine can be increased significantly.

### Brief Description of the Drawings

**In the drawings:**
Figure 1 is a diagrammatic end view of a conventional pea vining machine;
Figure 2 is a diagrammatic end view of a pea vining machine according to the invention;
Figure 3 is a diagrammatic side view of the mounting of the rotor shown in Figure 2;
Figure 4 is a diagrammatic top plan view of the machine shown in Figures 2 and 3;
Figure 5 is a side elevation of a pea harvesting machine incorporating a pea vining machine of the type shown in Figures 2 to 4;
Figure 6 is a diagrammatic representation of the hydraulic circuit controlling the movement of the rotor in the machine of the invention;
Figure 7 is a diagrammatic side view of an embodiment of the pre-threshing means;
Figure 8 is a diagrammatic plan view of the pre-threshing means of Figure 7;
Figure 9 is a diagrammatic end view of the pre-threshing means of Figure 7;
Figure 10 is a side elevation of a pea harvesting machine incorporating a pea vining machine of the type shown in Figures 2 and 3 and a pre-threshing means as shown in Figures 7 to 9.

### Description of the Prior Art

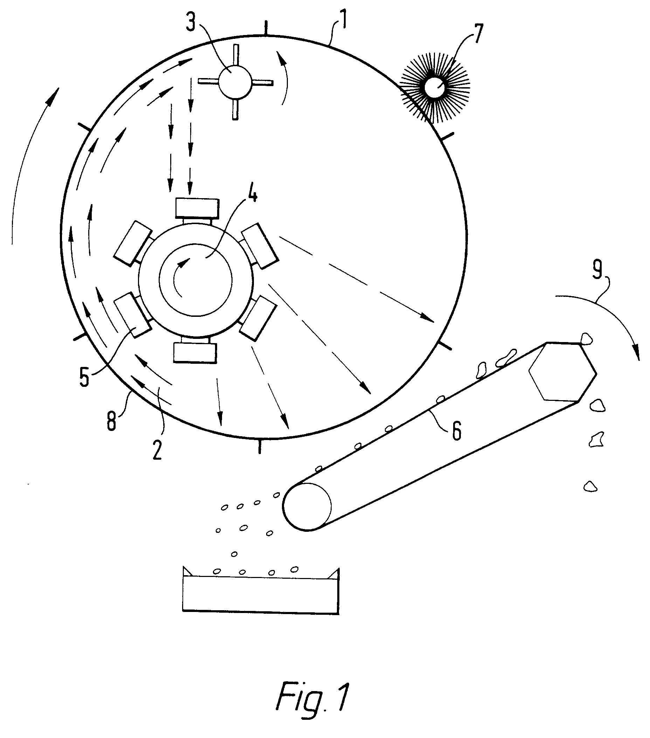

Referring to Figure 1, a conventional pea vining machine comprises a mesh drum 1 which is rotatable about its longitudinal axis at a speed sufficient to cause pea plant material 2 introduced into the drum to be carried upwardly on the interior surface of the drum by centrifugal force. A paddle device 3 is mounted within the drum near to the apex thereof, and rotates to detach any material 2 which does not fall off the drum interior surface under the influence of gravity as it approaches the top. A rotor 4 is mounted within the drum 1 with its axis of rotation generally parallel to that of the drum, but offset therefrom. The rotor 4 has beaters 5 around its periphery, and is rotated at a higher speed than the drum.

As the material 2 falls down on to the rotor 4, it is struck by the beaters 5, and the impact causes the pods to split, allowing the peas to drop downwardly and through the mesh of the drum wall to land on a belt 6 which is arranged so that the peas tend to roll downwardly against the direction of motion of the belt's upper surface, while any waste material escaping through the mesh will tend to be carried upwardly by the belt and so be discharged to the side of the machine. In the case of a mobile harvesting machine, the waste material simply falls back on to the field. Waste material adhering to the exterior of the drum is cleaned off by brushes 7.

### Detailed Description of the Illustrated Embodiments

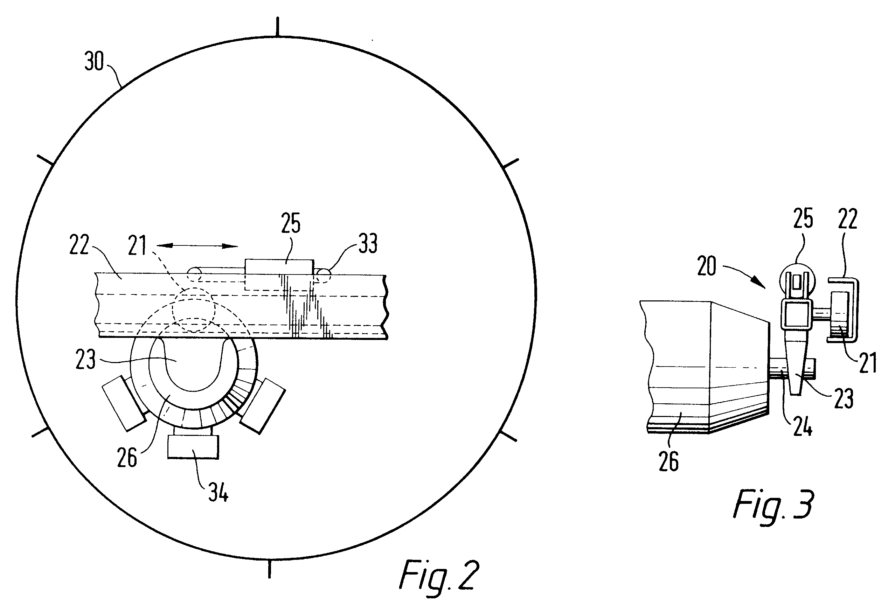

In one pea vining machine according to the invention, illustrated in Figures 2 to 4, the rotor 26 is mounted within the drum 30 by means of a carriage 20 at each end having a roller 21 running in a transverse track 22, a support bearing 23 carrying the spindle 24 of the rotor 26, and a hydraulic ram 25 extending to a fixed mounting 33, for example on the track 22. The hydraulic ram 25 is preferably controlled by an hydraulic circuit which is of the pressure compensating type in which fluid pressure over a predetermined limit is relieved, allowing the ram to retract until the pressure within it is again below the limit. This means that the rotor 26 is slid laterally towards the wall of the drum 30 until the pressure exerted on the material trapped between it and the wall reaches a predetermined figure, at which point no further movement of the rotor towards the wall is possible. If the amount of material increases, the ram 25 is forced to retract, withdrawing the rotor 26, while if the amount of material in the gap between the rotor 26 and the wall decreases, the ram 25 extends, pushing the rotor 26 further towards the wall. In this way, a substantially constant pressure is maintained by the rotor 26 on material coming between it and the wall of the drum 30, at the optimum level for splitting the pods without damage to the peas. The efficiency of separation is thus kept as high as possible.

The speed of the drum 30 is about 25 to 35 revolutions per minute, depending on the conditions. The rotor 26, by contrast, is run at about 150 to 190 rpm. All drives on the machine are suitably hydraulic motors supplied from a pump driven by a diesel engine, for example in the case where the machine is part of a pea-harvesting machine, the main engine providing power to move the vehicle, again using hydraulic motors.

The carriages 20 are arranged such that a degree of pivoting of the rotor 26 relative to each carriage is possible, so that each end of the rotor 26 can be moved independently according to the conditions nearer to each end. Thus, for example, one end of the rotor 26 might be moving towards the wall of the drum 30 at the same time as the other end is moving away to accommodate a larger quantity of material at that end.

Paddles 34 may be provided on rotor 4, in order to help move the plant material between the rotor 26 and the drum 30.

The pea vining machine according to the invention may also be provided with the paddle device 3 and brush 7 as described with reference to Figure 1. Paddle device 3 serves to remove any crop material retained within the mesh of the screen, while brush 7, positioned on the outside of the drum removes material adhering to the drum from the outside thereof.

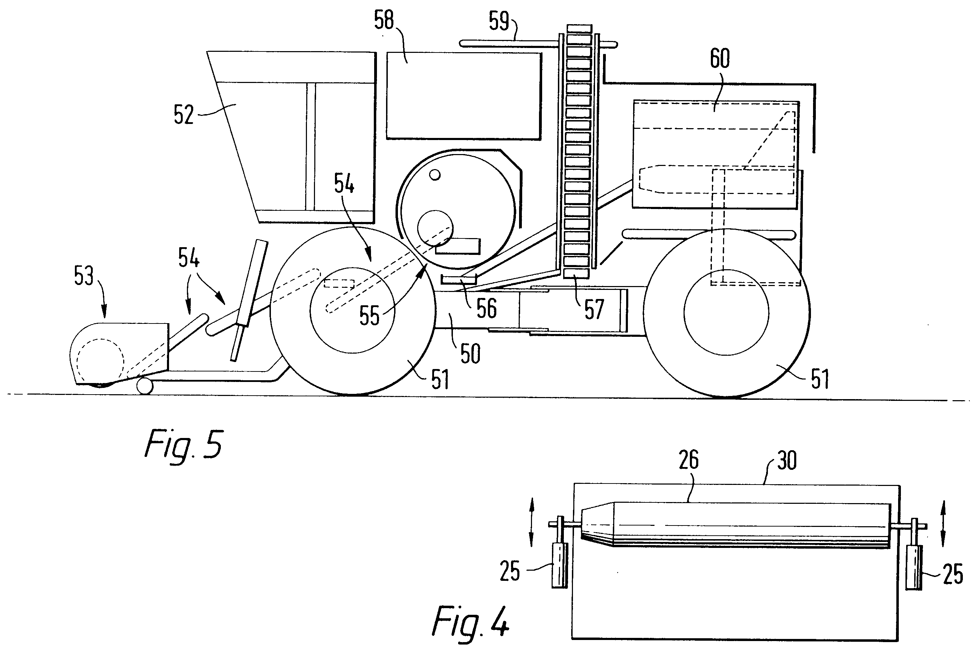

Figure 5 shows a pea harvesting machine according to the invention, comprising a self-powered wheeled vehicle having a chassis 50 mounted on four wheels 51, and with a driver/operator's cab 52 at the front end thereof. Extending forward of the chassis is a powered stripper 53 which lifts the pea vines on to a series of conveyor belts 54 which in turn lift the vines to deliver them into one end of a first vining machine 55 in accordance with the invention. The peas are delivered by a conveyor belt 56 running beneath the machine 55 to a lifting belt 57 which lifts the peas into a holding tank 58 via a further conveyor belt 59. The residual unthreshed vines emerging from the machine 55 are conveyed to a second vining machine 60, arranged at right angles to and to the rear of the first, where further extraction takes place in the same manner as in the first vining machine, to ensure that the maximum vining efficiency is achieved, the waste vines then being deposited to the rear of the vehicle, to be ploughed in or otherwise disposed of.

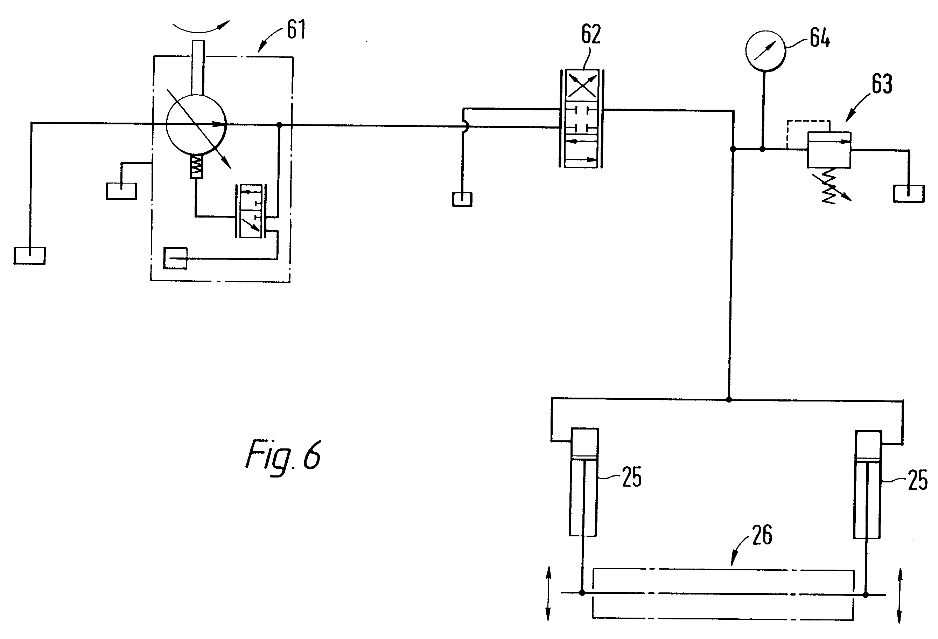

The control of the hydraulic pressure on the rotor may be understood by reference to Figure 6. A variable displacement pump 61 generates a constant system pressure of about 170 bar and allows the volumetric flow rate to change to suit requirements. The flow of oil is directed to the hydraulic rams 25 via an on-off valve 62 and a pressure-regulating valve 63, fitted in the vehicle cab to permit the operator to increase the circuit pressure as conditions vary. A gauge 64 indicates the system pressure. It will be seen that, with the rams 25 supplied in parallel, a generally uniform pressure is applied to the vines between the rotor and wall of the drum along the length of the rotor.

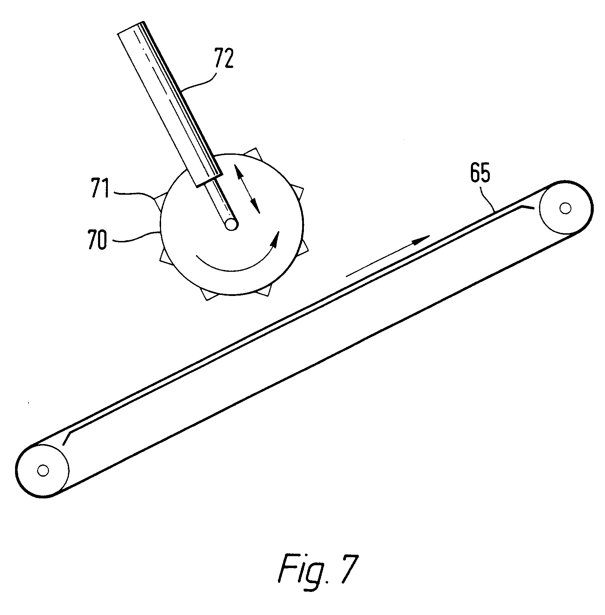

Figures 7 to 9 show a threshing apparatus according to the invention which functions as a first stage threshing apparatus, known as a pre-threshing apparatus. Such an apparatus may be used as part of a pea vining machine. The first stage threshing apparatus comprises a conveyor belt 65, above which is mounted a rotor 70. The rotor 70 is connected to hydraulic rams 72, which provide for movement of the rotor 70 towards and away from the conveyor belt 65, according to the amount of material being passed through the first stage threshing apparatus. The hydraulic rams 72 are connected to an hydraulic circuit identical to that shown in figure 6. Rotor 70 is driven so that its surface speed is approximately 25% faster than that of the belt below. As the crop passes through the pre-thresher, it is subjected to both squeezing (due to the force exerted by the rotor on the plant material) and rubbing (due to the different surface speeds of the conveyor 65 and the rotor 70) actions. In excess of 50% of pods are opened as a result of these actions. In the embodiment shown, rotor 70 is provided with a plurality protrusions 71 which run the length of the rotor 70 and spaced around the circumference thereof.

Peas are not separated from other plant material in the first stage threshing apparatus. Rather, all material is transferred to the main threshing drum.

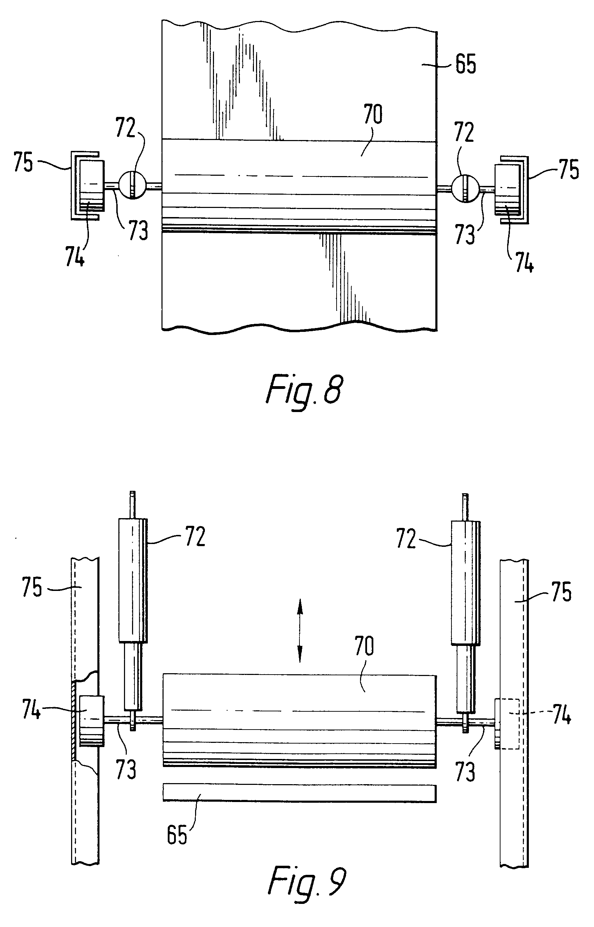

Figures 8 and 9 show the mounting of rotor 70. Rotor 70 is mounted on a shaft 73, the ends of which are carried in bearings (not shown), the said bearings are carried in rollers 74. Tracks 75 are provided at each end of the shaft 73, and are adapted to co-operate with rollers 74 to permit sliding of rollers 74 in tracks 75. Movement of the rotor towards or away from the conveyor 64 is caused by hydraulic cylinders 72. One end of each hydraulic cylinder 72 is attached to shaft 73, the other end being attached to a fixed point on a frame (not shown). The frame may be part of the chassis of a pea harvesting machine comprising a first stage threshing device as described with reference to Figures 7 to 9.

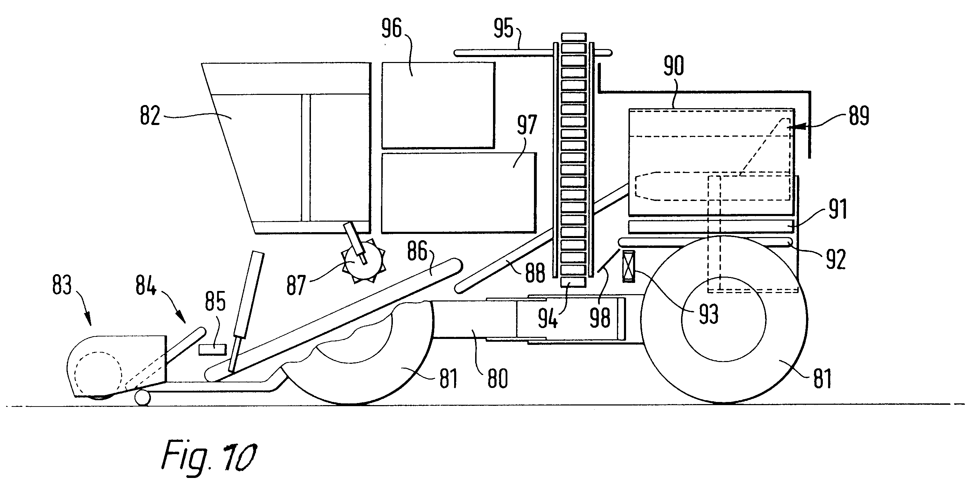

Figure 10 illustrates a pea harvesting machine according to the invention, comprising a self-powered wheeled vehicle having a chassis 80 mounted on four wheels 81, and with a driver/operator's cab 82 at the front end thereof. Extending forward of the chassis is a powered stripper 89 which lifts the pea vines on to a series of conveyor belts 84, 85 which in turn lift and deliver the vines to a first stage threshing apparatus which comprises conveyor belt 84 and rotor 87, and is shown in more detail in Figures 7 to 9. The threshed peas, unthreshed vines and all other plant material which entered the first stage threshing apparatus, pass on to conveyor 88, which lifts the material and delivers it into one end of a vining machine 89 in accordance with the invention.

Peas and small waste material pass through the perforations in drum 90 on to draper belt 91, comprising a conveyor belt and rotors, which functions in the same way as belt 6 as described with reference to Figure 1. The underside of the conveyor belt 6 may be provided with a series of slats (not shown) which cooperate with the hexagonal rotor as shown in Figure 1, in order to agitate material on the draper belt 6.

Peas and any waste material fall on to a first conveyor belt 92 mounted beneath draper belt 91. The conveyor 92 delivers the material to a first cleaning device which preferably comprises a suction cleaning fan 93 and a perforated plate 98. The suction cleaning fan 93 sucks off any waste material and ejects it from the machine, while the cleaned peas drop on to a lifting belt 94, preferably a bucket elevator, which transfers the peas to a further conveyor belt 95, which transfers the peas to a second cleaning device 96. Second cleaning device 96 comprises a further suction cleaning fan and/or a rotating perforate drum. The size of hole in the perforate drum is chosen according to peas size. Peas are transferred from the second cleaning device 96 to holding tank 97. Preferably holding tank 97 is adapted to provide for unloading whilst the machine is still harvesting.

## Claims

1. A pea threshing apparatus comprising:
a first (26,70) and second (30,65) threshing member between which plant material comprising pods passes, said first (26,70) and second (30,65) threshing members arranged to exert a compressive force on the legume plant material passing therebetween sufficient to open the pods;
said first threshing member (26,70) having a first end and a second end and mounted by a mounting arrangement which permits said first threshing member to move towards and away from said second threshing member (30, 65) in order to maintain a substantially constant compressive force on the plant material compressed between said threshing members, characterized by;
said mounting arrangement including at least one hydraulic cylinder (25,72) and a pressure control system to maintain a substantially constant hydraulic pressure therein, such that said first threshing member automatically moves towards and away from said second threshing member according to the quantity of plant material therebetween.

2. A threshing apparatus according to claim 1, wherein said compressive force may be varied according to the harvesting conditions and crop variety.

3. A threshing apparatus according to claim 1 or 2, wherein at least one of said first and second threshing members is driven.

4. A threshing apparatus according to claim 3, wherein at least one of said first and second threshing members is driven to produce a surface speed in excess of a surface speed of the other threshing member.

5. A threshing apparatus according to any preceding claim, wherein said second threshing member is a drum (30).

6. A threshing apparatus according to claim 5, wherein said second threshing member (30) is perforate.

7. A threshing apparatus according to any proceeding claim, wherein said mounting arrangement permits each end of said first threshing member (26,70) to move independently of the other end.

8. A threshing apparatus according to claim 1 or 7, wherein said first end of said first threshing member (26) is mounted by a mounting arrangement which includes a roller running in or on a track (22,75).

9. A threshing apparatus according to claim 1, 7 or 8, wherein said second end of said first threshing member (26) is mounted by a mounting arrangement which provides for said first end to pivot about said second end.

10. A threshing apparatus according to claim 9, wherein said mounting arrangement which provides for pivoting of said first end is a self-aligning bearing.

11. A threshing apparatus according to any preceding claim, wherein said first threshing member (26,70) includes protrusions (34,71) to move the plant material through said threshing apparatus (30,65).

12. A threshing apparatus according to claim 4, wherein said first threshing member (26,70) is driven at a surface speed 10 to 40 percent faster than the other threshing member (30,65).

13. A threshing apparatus according to claim 12, wherein at least one of said first (26,70) and second (30,65) threshing members is driven at a surface speed 25 percent faster than the other threshing member.

14. A threshing apparatus according to claim 12 or 13, wherein said second threshing member comprises a conveyor belt (65).

15. A threshing apparatus according to claim 14, wherein said first threshing member (70) is mounted above said conveyor belt (65).

16. A machine for vining, comprising at least one threshing apparatus according to any one of claims 1-15.

17. A machine for vining according to claim 16, wherein:
said second threshing member comprises a rotatable perforate drum (30) having an internal surface, a means for rotating said second threshing member, and a means (54) for introducing the plant material at one end of said second threshing member (30);
said first threshing member (26) is mounted within said second threshing member (30) and extends over the length thereof, said first threshing member (26) having a means for rotating independently of said second threshing member (30);
said mounting arrangement (20) permitting said first threshing member (26) to move essentially laterally within said second threshing member (30) in order to maintain a substantially constant compressive force on the legume plant material compressed between said first and second threshing members (26,30).

18. A machine for vining according to claim 16 or 17 further comprising a second threshing apparatus according to any of claims 12-15.

19. A machine for vining according to claim 18 wherein said second threshing apparatus comprises a threshing apparatus according to claim 14 or 15.

20. A mobile harvesting machine comprising:
A vehicle mounting at least one threshing apparatus according to any claim 1 to 15 and means for gathering the plant material to said threshing apparatus.

21. A mobile harvesting machine according to claim 20, comprising a first and a second threshing apparatus.

22. A mobile harvesting machine according to claim 20 or 21, wherein said harvesting machine is self propelled.

23. A process for threshing peas comprising a step of exerting on a mass of plant material comprising pods a compressive force sufficient to open the pods, characterized in that the compressive force is exerted on said plant material by passing said plant material through a threshing apparatus according to any of claims 1 - 15.

24. A process for threshing peas according to claim 23, comprising a first step of passing plant material comprising pods through a first threshing apparatus according to any of claims 12-15, and a second step of passing the plant material resulting from the first step through a second threshing apparatus.

25. A process according to claim 24, wherein said second threshing apparatus is a threshing apparatus according to any one of claims 1 - 11.

26. A process for vining peas including the step of passing plant material comprising pods through a machine for vining peas according to any one of claims 17-19.

27. A process for harvesting peas using a mobile harvesting machine according to any one of claims 20-22.

## Patentansprüche

1. Gerät zum Dreschen von Erbsen, das folgendes aufweist:
ein erstes (26,70) und zweites (30,65) Dreschelement, zwischen welches Schoten enthaltendes Pflanzenmaterial durchgeführt wird, wobei das erste (26,70) und das zweite (30,65) Dreschelement so angeordnet sind, daß eine Kompressionskraft auf das Pflanzenmaterial aus Hülsenfrüchten, das zwischen diesen Elementen durchgeführt wird, in ausreichendem Maße einwirkt, um die Schoten zu öffnen;
wobei das erste Dreschelement (26,70) ein erstes Ende und ein zweites Ende aufweist und mit einer Befestigungsanordnung angebracht ist, die dem ersten Dreschelement ermöglicht, sich auf das zweite Dreschelement (30,65) hin und von diesem wegzubewegen, um eine im wesentlichen konstante Kompressionskraft auf das Pflanzenmaterial aufrechtzuerhalten, das zwischen den Dreschelementen zusammengepreßt wird, dadurch gekennzeichnet, daß
die Befestigungsanordnung wenigstens einen Hydraulikzylinder (25,72) und ein Drucksteuersystem enthält, um einen im wesentlichen konstanten hydraulischen Druck in demselben aufrechtzuerhalten, so daß das erste Dreschelement sich automatisch auf das zweite Dreschelement hin und von diesem wegbewegt entsprechend der Menge an dazwischen befindlichem Pflanzenmaterial.

2. Gerät zum Dreschen nach Anspruch 1, bei dem die Kompressionskraft entsprechend den Erntebedingungen und der Fruchtsorte variiert werden kann.

3. Gerät zum Dreschen nach Anspruch 1 oder 2, bei dem wenigstens eines der ersten und zweiten Dreschelemente angetrieben wird

4. Gerät zum Dreschen nach Anspruch 3, bei dem wenigstens eines der ersten und zweiten Dreschelemente zur Erzeugung einer Außenflächengeschwindigkeit angetrieben wird, die größer ist als die Außenflächengeschwindigkeit des anderen Dreschelementes.

5. Gerät zum Dreschen nach irgendeinem vorhergehenden Anspruch, bei dem das zweite Dreschelement eine Trommel (30) ist.

6. Gerät zum Dreschen nach Anspruch 5, bei dem das zweite Dreschelement (30) gelocht ist.

7. Gerät zum Dreschen nach irgendeinem vorhergehenden Anspruch, bei dem die Befestigungsanordnung gestattet, daß jedes Ende des ersten Dreschelementes (26,70) sich unabhängig von dem anderen Ende bewegt.

8. Gerät zum Dreschen nach Anspruch 1 oder 7, bei dem das erste Ende des ersten Dreschelementes (26) mit einer Befestigungsanordnung angebracht ist, die eine Walze enthält, die in oder auf einer Schiene (22, 75) läuft.

9. Gerät zum Dreschen nach Anspruch 1,7 oder 8, bei dem das zweite Ende des ersten Dreschelementes (26) mit einer Befestigungsanordnung angebracht ist, durch die das erste Ende um das zweite Ende schwenkbar ist.

10. Gerät zum Dreschen nach Anspruch 9, bei dem die Befestigungsanordnung, durch die das erste Ende schwenkbar ist, ein selbstjustierendes Lager ist.

11. Gerät zum Dreschen nach irgendeinem vorhergehenden Anspruch, bei dem das erste Dreschelement (26,70) Vorsprünge (34,71) aufweist, um das Pflanzenmaterial durch das Dreschgerät (30,65) zu bewegen.

12. Gerät zum Dreschen nach Anspruch 4, bei dem das erste Dreschelement (26,70) mit einer Außenflächengeschwindigkeit angetrieben wird, die 10 bis 40 Prozent größer ist als die des anderen Dreschelementes (30,65).

13. Gerät zum Dreschen nach Anspruch 12, bei dem wenigstens eines der ersten (26,70) und zweiten (30,65) Dreschelemente mit einer Außenflächengeschwindigkeit angetrieben wird, die 25 Prozent größer ist als die des anderen Dreschelementes.

14. Gerät zum Dreschen nach Anspruch 12 oder 13, bei dem das zweite Dreschelement ein Förderband (65) aufweist.

15. Gerät zum Dreschen nach Anspruch 14, bei dem das erste Dreschelement (70) über dem Förderband (65) angebracht ist.

16. Erbsenerntemaschine, die wenigstens ein Gerät zum Dreschen nach irgendeinem der Ansprüche 1-15 aufweist.

17. Erbsenerntemaschine nach Anspruch 16, bei der
das zweite Dreschelement eine drehbare gelochte Trommel (30) mit einer Innenfläche, Mittel zum Drehen des zweiten Dreschelementes und Mittel (54) aufweist, um das Pflanzenmaterial an einem Ende des zweiten Dreschelementes (30) einzuführen;
das erste Dreschelement (26) innerhalb des zweiten Dreschelementes (30) angebracht ist und sich über die Länge desselben erstreckt, wobei das erste Dreschelement (26) Mittel aufweist, um sich unabhängig von dem zweiten Dreschelement (30) zu drehen;
wobei die Befestigungsanordnung (20) dem ersten Dreschelement (26) gestattet, sich im wesentlich lateral in dem zweiten Dreschelement (30) zu bewegen, um eine im wesentlichen konstante Kompressionskraft auf das Pflanzenmaterial aus Hülsenfrüchten, das zwischen dem ersten und zweiten Dreschelementen (26,30) komprimiert wird, aufrechtzuerhalten.

18. Erbsenerntemaschine nach Anspruch 16 oder 17, die außerdem ein zweites Dreschgerät nach irgendeinem der Ansprüche 12-15 aufweist.

19. Erbsenerntemaschine nach Anspruch 18, bei der das zweite Dreschgerät ein Dreschgerät nach Anspruch 14 oder 15 aufweist.

20. Mobile Erntemaschine, die folgendes aufweist:
ein Fahrzeug, bei dem wenigstens ein Dreschgerät nach irgendeinem Anspruch 1 bis 15 angebracht ist, und Mittel zum Sammeln des Pflanzenmaterials für das Dreschgerät.

21. Mobile Erntemaschine nach Anspruch 20, die ein erstes und ein zweites Dreschgerät aufweist.

22. Mobile Erntemaschine nach Anspruch 20 oder 21, bei der die Erntemaschine automatisch angetrieben wird.

23. Verfahren zum Dreschen von Erbsen, das einen Schritt aufweist, bei dem auf eine Menge von Schoten enthaltendem Pflanzenmaterial eine Kompressionskraft ausgübt wird, die ausrreichend ist, um die Schoten zu öffnen, dadurch gekennzeichnet, daß die Kompressionskraft auf das Pflanzenmaterial dadurch wirkt, daß das Pflanzenmaterial ein Dreschgerät nach irgendeinem der Ansprüche 1-15 durchläuft.

24. Verfahren zum Dreschen von Erbsen nach Anspruch 23, das einen ersten Schritt aufweist, in dem ein Schoten enthaltende Pflanzenmaterial ein erstes Dreschgerät nach irgendeinem der Ansprüche 12-15 durchläuft, und einen zweiten Schritt aufweist, in dem das aus dem ersten Schritt kommende Pflanzenmaterial ein zweites Dreschgerät durchläuft.

25. Verfahren nach Anspruch 24, bei dem das zweite Dreschgerät ein Dreschgerät nach irgendeinem der Ansprüche 1-11 ist.

26. Verfahren zum Ernten von Erbsen, das den Schritt aufweist, in dem ein Schoten enthaltende Pflanzenmaterial eine Maschine zum Ernten von Erbsen nach irgendeinem der Ansprüche 17-19 durchläuft.

27. Verfahren zum Ernten von Erbsen, das eine mobile Erntemaschine nach irgendeinem der Ansprüche 20-22 verwendet.

## Revendications

1. Appareil de battage des pois, comprenant:
- un premier (26, 70) et un second (30, 65) élément de battage entre lesquels passent des végétaux comprenant des cosses, lesdits premier (26, 70) et second (30, 65) éléments de battage étant disposés de façon à exercer une force de compression sur les végétaux à légumes passant entre eux qui est suffisante pour ouvrir les cosses ;
- ledit premier élément de battage (26, 70) ayant une première extrémité et une seconde extrémité et étant monté par un dispositif de montage oui permet audit premier élément de battage de se déplacer en direction de et à l'opposé dudit second élément de battage (30, 65) de façon à maintenir une force de compression sensiblement constante sur les végétaux comprimés entre lesdits éléments de battage,
caractérisé par le fait que :
- ledit dispositif de montage comprend au moins un cylindre hydraulique (25, 72) et un système de commande de la pression pour maintenir une pression hydraulique sensiblement constante dans celui-ci, de telle sorte que ledit premier élément de battage se déplace automatiquement en direction de et à l'opposé dudit second élément de battage selon la qualité des végétaux passant entre eux.

2. Appareil de battage selon la revendication 1, dans lequel on peut faire varier ladite force de compression selon les conditions de récolte et la variété de la récolte.

3. Appareil de battage selon l'une des revendications 1 ou 2, dans lequel au moins l'un desdits premier et second éléments de battage est commandé.

4. Appareil de battage selon la revendication 3, dans lequel au moins l'un desdits premier et second éléments de battage est commandé pour produire une vitesse de surface en excès d'une vitesse de surface de l'autre élément de battage.

5. Appareil de battage selon l'une quelconque des revendications précédentes, dans lequel ledit second élément de battage est un tambour (30).

6. Appareil de battage selon la revendication 5, dans lequel ledit second élément de battage (30) est perforé.

7. Appareil de battage selon l'une quelconque des revendications précédentes, dans lequel ledit dispositif de montage permet à chaque extrémité dudit premier élément de battage (26, 70) de se déplacer indépendamment de l'autre extrémité.

8. Appareil de battage selon l'une des revendications 1 ou 7, dans lequel ladite première extrémité dudit premier élément de battage (26) est montée par un dispositif de montage qui comprend un rouleau se déplaçant dans ou sur une glissière (22, 75).

9. Appareil de battage selon l'une des revendications 1, 7 ou 8, dans lequel ladite seconde extrémité dudit premier élément de battage (26) est montée par un dispositif de montage oui assure le pivotement de ladite première extrémité autour de ladite seconde extrémité.

10. Appareil de battage selon la revendication 9, dans lequel ledit dispositif de montage qui assure le pivotement de ladite première extrémité est un palier à alignement automatique.

11. Appareil de battage selon l'une quelconque des revendications précédentes, dans lequel ledit premier élément de battage (26, 70) comprend des saillies (34, 71) pour déplacer les végétaux à travers ledit appareil de battage (30, 65).

12. Appareil de battage selon la revendication 4, dans lequel ledit premier élément de battage (26, 70) est entrainé à une vitesse de surface de 10 à 40 pour cent plus grande que l'autre élément de battage (30, 65).

13. Appareil de battage selon la revendication 12, dans lequel au moins l'un desdits premier (26, 70) et second (30, 65) éléments de battage est entrainé à une vitesse de surface de 25 pour cent plus grande que l'autre élément de battage.

14. Appareil de battage selon l'une des revendications 12 ou 13, dans lequel ledit second élément de battage comprend une bande transporteuse (65).

15. Appareil de battage selon la revendication 14, dans lequel ledit premier élément de battage (70) est monté au-dessus de ladite bande transporteuse (65).

16. Machine à écosser, comprenant au moins un appareil de battage tel que défini à l'une quelconque des revendications 1 à 15.

17. Machine à écosser selon la revendication 16, dans laquelle :
- ledit second élément de battage comprend un tambour perforé tournant (30) ayant une surface interne, un moyen pour faire tourner ledit second élément de battage, et un moyen (54) pour introduire les végétaux à l'une des extrémités dudit second élément de battage (30) ;
- ledit premier élément de battage (26) est monté à l'intérieur dudit second élément de battage (30) et s'étend sur la longueur de celui-ci, ledit premier élément de battage (26) ayant un moyen de mise en rotation indépendamment dudit second élément de battage (30) ;
- ledit dispositif de montage (20) permettant audit premier élément de battage (26) de se déplacer sensiblement latéralement à l'intérieur dudit second élément de battage (30), de façon à maintenir une force de compression sensiblement constante sur les végétaux à légumes comprimés entre lesdits premier et second éléments de battage (26, 30).

18. Machine à écosser selon l'une des revendication 16 ou 17, comprenant en outre un second appareil de battage tel que défini à l'une quelconque des revendications 12 à 15.

19. Machine à écosser selon la revendication 18, dans laquelle ledit second appareil de battage comprend un appareil de battage tel que défini à l'une des revendications 14 ou 15.

20. Machine à récolter mobile comprenant :
- un véhicule sur lequel est monté au moins un appareil de battage tel que défini à l'une quelconque des revendications 1 à 15 et des moyens pour rassembler les végétaux sur ledit appareil de battage.

21. Machine à récolter mobile selon la revendication 20, comprenant un premier et un second appareil de battage.

22. Machine à récolter mobile selon l'une des revendications 20 ou 21, dans laquelle ladite machine à récolter est automotrice.

23. Procédé pour le battage des pois comprenant une étape consistant à exercer sur une masse de végétaux comprenant des cosses une force de compression suffisante pour ouvrir les cosses, caractérisé par le fait qu'on exerce une force de compression sur lesdits végétaux en faisant passer lesdits végétaux à travers un appareil de battage tel que défini à l'une quelconque des revendications 1 à 15.

24. Procédé pour le battage des pois selon la revendication 23, comprenant une première étape consistant à faire passer des végétaux comprenant des cosses à travers un premier appareil de battage tel que défini à l'une quelconque des revendications 12 à 15, et une seconde étape consistant à faire passer les végétaux résultant de la première étape à travers un second appareil de battage,

25. Procédé selon la revendication 24, dans lequel ledit second appareil de battage est un appareil de battage tel que défini à l'une quelconque des revendications 1 à 11.

26. Procédé d'écossage des pois comprenant l'étape consistant à faire passer des végétaux comprenant des cosses à travers une machine à récolter les pois telle que définie à l'une quelconque des revendications 17 à 19.

27. Procédé de récolte des pois à l'aide d'une machine à récolter mobile telle que définie à l'une quelconque des revendications 20 à 22.
